# EUROPÄISCHE PATENTSCHRIFT

(11) **EP 0 484 679 B1**
(45) Veröffentlichungstag und Bekanntmachung des Hinweises auf die Patenterteilung: **29.03.1995**
(21) Anmeldenummer: 91117021.5
(22) Anmeldetag: 07.10.1991
(51) Int. Cl.: B65G 69/28

(54) **Zum Überbrücken von Eisenbahngleisen dienende Überfahrbrücke**
Loading ramp for bridging railway tracks
Pont de chargement servant à traverser des voies de chemin de fer

(30) Priorität: 17.10.1990 DE 4032892
(43) Veröffentlichungstag der Anmeldung: 13.05.1992
(73) Patentinhaber: Alten, Kurt, D-30974 Wennigsen (DE)
(72) Erfinder: Alten, Kurt, D-30974 Wennigsen (DE); Böttcher, Albert, D-30974 Wennigsen (DE)
(74) Vertreter: Depmeyer, Lothar

(56) Entgegenhaltungen:
- EP-A- 0 193 119
- EP-A- 0 354 385
- DE-A- 2 950 352
- DE-A- 3 514 468
- DE-B- 1 157 547

## Beschreibung

Die Erfindung betrifft eine zum Überbrücken von Eisenbahngleisen dienende Überfahrbrücke mit einer Brückenplatte, die von einer etwa senkrechten Ruhestellung aus durch eine hinter den Gleisen befindliche Anlenkstelle mit waagerechter Schwenkachse in die etwa waagerechte Wirklage klappbar ist, in der sie mit ihrem freien Ende auf einer vor den Gleisen befindlichen Rampe aufliegt, wobei die Anlenkstelle an einem senkrecht nach oben gerichteten Ausleger eines Fahrwerks angeordnet ist, das hinter den Gleisen parallel hierzu geführt ist (DE-B-1 157 547).

Derartige Überfahrbrücken erfordern erhebliche Freiräume bzw. vergleichsweise hohe Räume oberhalb der Gleise, wenn die Brückenplatte klappbar ausgeführt und in der Ruhestellung senkrecht nach oben gerichtet ist.

Der Erfindung liegt die Aufgabe zugrunde, die eingangs erwähnten Überfahrbrücken so auszubilden, dass ihre Brückenplatte auch bei vergleichsweise niedrigen Räumen eine grosse Spannweite erhalten kann.

Diese Aufgabe wird mit den kennzeichnenden Merkmalen des Anspruchs 1 gelöst.

Aufgrund dieses Vorschlages verringert sich die Bauhöhe der Überfahrbrücke praktisch durch den vorerwähnten Hub der Anlenkstelle. Sie kann daher in weniger hohe Räume eingebaut werden.

Bevorzugte Ausführungsformen der Erfindung sind in den abhängigen Ansprüchen angegeben.

Die Erfindung lässt sich besonders günstig verwirklichen, wenn die Brückenplatte im Abstand von der Anlenkstelle von einem Lenker unterfangen wird, dessen oberes Ende an der Brückenplatte und dessen unteres Ende am Ausleger angelenkt wird. Zudem wird dabei die Anlenkstelle mit Vorteil an einem am Ausleger und in dessen Richtung verfahrbaren Schlitten gelagert. Es ist somit lediglich erforderlich, zum Hochschwenken der Brückenplatte den Schlitten z.B. durch einen Arbeitszylinder nach unten zu fahren; die Anlenkstelle wird dabei abgesenkt, während zugleich die Brückenplatte um die obere Anlenkung am Lenker verschwenkt, der wiederum einen Schwenk in Richtung auf den Ausleger vollzieht. Im eingezogenen, hochgeklappten Zustand der Brückenplatte liegt dann der Lenker etwa in der Ebene des Auslegers, während sich die Anlenkstelle dem unteren Ende des Auslegers genähert hat.

Weitere Einzelheiten der Erfindung werden anhand der Zeichnung erläutert, in der Ausführungsbeispiele der Erfindung dargestellt sind. Es zeigen :
- Fig. 1: eine in der Wirkstellung befindliche Überfahrbrücke für die Überbrückung von Eisenbahngleicen im senkrechten Schnitt ( Brückenplatte der Länge nach geschnitten ),
- Fig. 2: eine Teilansicht der Brücke gemäss Fig. 1 in Richtung des Pfeiles II gesehen,
- Fig. 3: einen Schnitt nach der Linie III - III von Fig. 2 und
- Fig. 4: eine Draufsicht auf die gesamte Rampenanlage unter Verwendung einer Überfahrbrücke gemäss Fig. 1 - 3.

Zwischen einer Rampe 1 mit der Oberfläche 2 und der Aussenwand 3 einer Halle mit Decke 4 befinden sich Gleise 5. Die miteinander gekuppelten Eisenbahnwagen 6 haben Container 7 geladen, die von der Stirnseite aus be- bzw. entladen werden müssen. Parallel zu den Gleisen 5 zwischen diesen und der Aussenwand 3 verläuft eine Schiene 8 für eine elektrisch betriebenes Fahrwerk 9. Dieses trägt einen sich senkrecht nach oben erstreckenden Ausleger in Form eines geschlossenen Rahmens mit einer unteren Traverse 1o, einer oberen Traverse 11 und zwei seitlichen Stützen 12 in Form von U-Eisen. Parallel zur und oberhalb der Schiene 8 befindet sich unterhalb der Decke 4 eine Führungsschiene 13, in die Führungsrollen 14 der oberen Traverse 11 zur kippsicheren Lagerung des Rahmens eingreifen.

An beiden Stützen 12 sind längsverschiebbar mittels Rollen 15 Schlitten 16 gelagert, die fest durch einen Querträger 17 verbunden sind, der eine Anlenkstelle für eine Brückenplatte 18 mittels Scharnier 19 trägt, und zwar für eine Verschwenkung um eine waagerechte Achse.

Etwa auf einem Viertel der Länge der Brückenplatte 18 ist diese von unten her durch einen als Schwenkzylinder ausgebildeten Lenker 2o unterfangen, der unten an der Traverse 1o angelenkt ist.An den Schlitten 16 greift zudem ein parallel zu den Stützen 12 und oben an diesen befestigter Arbeitszylinder 21 an, der eine Schlittenverschiebung bewirken kann.

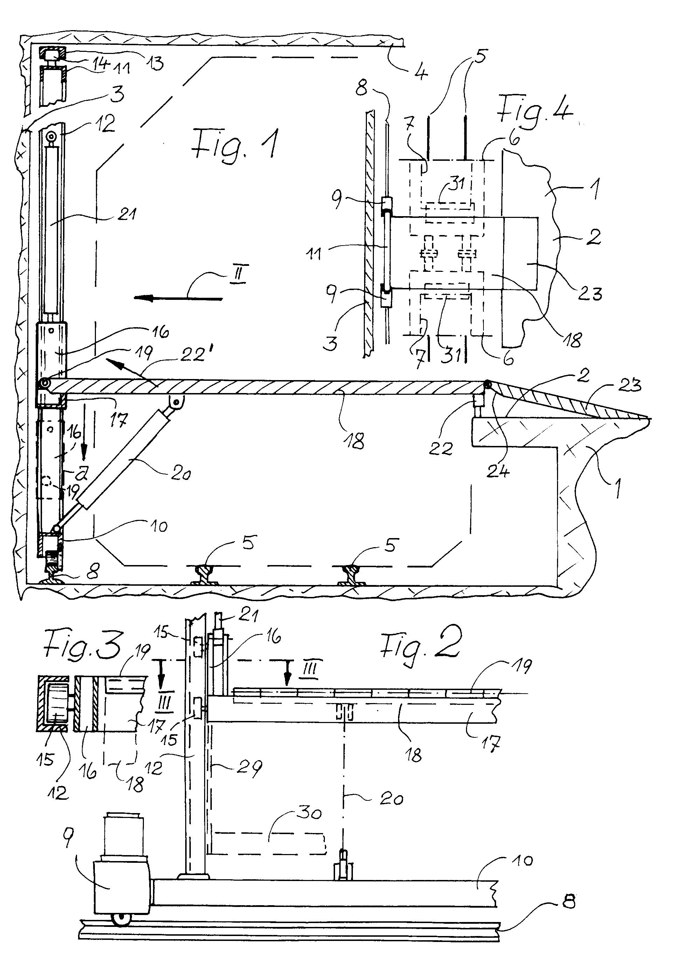

In der etwa waagerechten Wirkstellung der Brückenplatte 18 gemäss Fig. 1 stützt sich das freie Ende der Brückenplatte 18 über eine längenveränderbare, hydraulische Stütze 22 auf der Rampe 1 ab, wobei die Länge dieser Stütze 22 durch eine Druckmittelsperre im Rücklauf dieser Stütze fixiert ist.

Soll nun die Brückenplatte 18 durch Hochschwenken in ihre Ruhelage geführt werden, so wird der Arbeitszylinder 21 beaufschlagt, wobei er die beiden Schlitten 16 nach unten bewegt. Dabei vollführt die Brückenplatte 18 einen Schwenk um die oberen Anlenkstelle der Schwenkzylinder 2o, die mit fortschreitender Bewegung der Schlitten 16 nach unten selbst im Sinne des Pfeiles 22' in Richtung auf die Stützen 12 verschwenken. In der Endstellung haben die Schlitten 16 die Stellung bei a, während die beiden Schwenkzylinder 2o parallel zu den Stützen 12 verlaufen. Voraussetzung ist hierbei, dass die beiden Schwenkzylinder 2o über eine ausreichende Drucksteifigkeit verfügen. Wichtig ist indessen, dass mit dem Hochschwenken der Brückenplatte 18 deren Anlenkstelle abgesenkt wird, um so die Brückenplatte 18 platzsparend bzw. vertieft in der Ruhestellung aufnehmen zu können.

Es sei erwähnt, dass die am freien Ende der Brückenplatte 18 angelenkte Auffahrtplatte 23 lose auf der Fläche 2 aufliegt. Beim Hochschwenken der Brückenplatte 18 wird die Auffahrtplatte 23 mitgenommen; sie klappt nach unten, nimmt aber in der Endstellung eine Lage ein, bei der sie mit der Brückenplatte 18 einen Winkel von etwa 90° einschliesst. Eine weitere Verschwenkung ist ihr verwehrt, weil sie mit ihrer Fläche 24 an die Stirnfläche der Brückenplatte 18 anstösst. Mit dem Absenken gelangt die Auffahrtplatte 23 durch ihre Spitze mit der Fläche 2 in Berührung, sie nimmt dann in der Endstellung die Lage gemäss Fig. 1 ein.

Die beiden Zylinder 2o, 21 werden zweckmässigerweise als doppelwirkende Hydraulikzylinder ausgeführt und einem Hydrauliksystem zugeordnet. Dies hat den Vorteil, dass im Zusammenwirken mit der Stütze 22 eine Höhenregulierung der Brückenplatte 18 vollzogen werden kann, um sie den gewünschten Höhen insb. an den Eisenbahnwagen 6 anpassen zu können. Durch die Zylinder 2o, 21 ist es dann möglich, den einen Zylinder geringfügig zu verlängern und den anderen Zylinder entsprechend zu kürzen, und zwar im gewünschten Masse der Höhenkorrektur.

Anstelle der Höhenregulierung im vorgenannten Sinne mit Hilfe der beiden zusammenwirkenden Zylinder 2o, 21 kann auch ein weiterer Schlitten ( bei 29 angedeutet ) vorgesehen werden, der für beide Stützen 12 vorzusehen ist. Am unteren Ende werden die beiden Schlitten durch einen Querträger 3o verbunden, der zur Anlenkung der Schwenkzylinder 2o dient. Die weiter vorgesehenen Schlitten dienen ebenfalls zur Lagerung der Schlitten 16 und darüber am oberen Ende zur Anlenkung der Arbeitszylinder 21. Der somit vorgesehene grössere Schlitten muss dann durch einen gesonderten Stellzylinder im Sinne der hydraulischen Stütze 22 höhenverstellt werden können.

Zu Fig. 4 sei noch erwähnt, dass Auffahrtbleche 31 vorgesehen sein können die die Container 7 von der Brückenplatte 18 aus besser zugänglich machen.

## Patentansprüche

1. Zum Überbrücken von Eisenbahngleisen (5) dienende Überfahrbrücke mit einer Brückenplatte (18), die von einer etwa senkrechten Ruhestellung aus durch eine hinter den Gleisen (5) befindliche Anlenkstelle (19) mit waagerechter Schwenkachse in die etwa waagerechte Wirklage klappbar ist, in der sie mit ihrem freien Ende auf einer vor den Gleisen (5) befindlichen Rampe (1) aufliegt, wobei die Anlenkstelle (19) an einem senkrecht nach oben gerichteten Ausleger (10, 11, 12) eines Fahrwerks (9) heb- und senkbar gelagert ist, das hinter den Gleisen (5) parallel hierzu geführt ist, dadurch gekennzeichnet, dass das Heben und Senken der Anlenkstelle (19) beim Verschwenken der Brückenplatte (18) erfolgt, wobei die Anlenkstelle (19) beim Hochschwenken der Brückenplatte (18) von der Wirklage aus in die etwa senkrechte Ruhelage abgesenkt und beim Herabschwenken der Brückenplatte (18) von der etwa senkrechten Ruhelage aus in die Wirklage angehoben wird.

2. Brücke nach Anspruch 1, dadurch gekennzeichnet, dass die Brückenplatte (18) im Abstand von der Anlenkstelle (19) von einem Lenker (20) unterfangen ist und die Anlenkstelle (19) an einem am Ausleger (12) nach oben und unten verschiebbaren Schlitten (16) gelagert ist, auf den ein Arbeitszylinder (21) einwirkt.

3. Brücke nach Anspruch 2, dadurch gekennzeichnet, dass die untere Anlenkstelle des Lenkers (2o) fest mit dem Ausleger (1o) verbunden ist.

4. Brücke nach Anspruch 2, dadurch gekennzeichnet, dass die untere Anlenkstelle des Lenkers (2o) fest mit dem Schlitten (16) bzw. einem die beiden Schlitten (16) verbindenden Querträger (3o) verbunden ist.

5. Brücke nach Anspruch 2, dadurch gekennzeichnet, dass der Lenker ein doppeltwirkender hydraulischer Zylinder (2o) und auch der oberhalb des Schlittens (16) befindliche Arbeitszylinder (21) ein doppeltwirkender Arbeitszylinder ist.

6. Brücke nach Anspruch 5, dadurch gekennzeichnet, dass die beiden Zylinder (2o,21) einem Hydrauliksystem zugeordnet sind in der Weise, dass bei einer Verlängerung des einen Zylinders der andere Zylinder verkürzbar ist.

7. Brücke nach Anspruch 6, dadurch gekennzeichnet, dass durch Betätigen der beiden Zylinder (2o,21) die Höhe der in der Wirklage befindlichen Brückenplatte (18) regulierbar ist.

8. Brücke nach Anspruch 2, dadurch gekennzeichnet, dass in der Ruhelage der Brückenplatte (18) sowohl der Lenker (2o) als auch der Arbeitszylinder (21) praktisch senkrecht angeordnet sind.

9. Brücke nach einem oder mehreren vorausgehenden Ansprüchen, dadurch gekennzeichnet, dass die Lenker (2o) bzw. die Zylinder (21) je paarweise - ein Element auf der linken Seite, das andere auf der rechten Seite der Brückenplatte (18) - vorgesehen sind.

## Claims

1. Bridging means, which serves to bridge railway tracks (5) and is provided with a bridge plate (18), which is pivotable from a substantially vertical inoperative position, through a pivotal mounting (19) situated behind the tracks (5) and having a horizontal pivotal axis, into the substantially horizontal operative position, in which said bridge plate rests with its free end on a ramp (1) situated in front of the tracks (5), the pivotal mounting (19) being mounted in a raisable and lowerable manner on a vertically upwardly orientated member (10, 11, 12) of a chassis (9), which is guided behind the tracks (5) and parallel thereto, characterised in that the pivotal mounting (19) is raised and lowered by pivoting the bridge plate (18), the pivotal mounting (19) being lowered by upwardly pivoting the bridge plate (18) from the operative position into the substantially vertical inoperative position and being raised by downwardly pivoting the bridge plate (18) from the substantially vertical inoperative position into the operative position.

2. Bridging means according to claim 1, characterised in that the bridge plate (18) is supported by a guide means (20) at a spacing from the pivotal mounting (19), and the pivotal mounting (19) is mounted on a slide member (16), which is upwardly and downwardly displaceable on the member (12), and upon which a working cylinder (21) acts.

3. Bridging means according to claim 2, characterised in that the lower pivotal mounting of the guide means (20) is securedly connected to the member (10).

4. Bridging means according to claim 2, characterised in that the lower pivotal mounting of the guide means (20) is securedly connected to the slide member (16) or respectively to a transverse support (30) connecting the two slide members (16).

5. Bridging means according to claim 2, characterised in that the guide means is a double-acting hydraulic cylinder (20), and the working cylinder (21) situated above the slide member (16) is also a double-acting working cylinder.

6. Bridging means according to claim 5, characterised in that the two cylinders (20, 21) are associated with an hydraulic system in such a manner that, if one cylinder is lengthened, the other cylinder can be shortened.

7. Bridging means according to claim 6, characterised in that the height of the bridge plate (18), when in its operative position, is controllable by actuating the two cylinders (20, 21).

8. Bridging means according to claim 2, characterised in that, when the bridge plate (18) is in its inoperative position, both the guide means (20) and the working cylinder (21) are disposed virtually vertically.

9. Bridging means according to one or more of the preceding claims, characterised in that the guide means (20) and respectively the cylinders (20) are each provided in pairs - one element on the left-hand side of the bridge plate (18) and the other on the right-hand side of the bridge plate (18).

## Revendications

1. Pont de traversée utilisé pour franchir des voies ferrées (5) et comportant un tablier de pont (18), qui peut être rabattu d'une position de repos à peu près verticale, à l'aide d'un point d'articulation (19) se trouvant en arrière des voies (5) et avec un axe horizontal de basculement, à la position active à peu près horizontale, dans laquelle il s'appuie par son extrémité libre sur un quai (1) qui se trouve en avant des voies (5), le point d'articulation (19) étant monté, de manière à pouvoir être soulevé et abaissé, sur un bras en console (10,11,12), dirigé verticalement vers le haut, d'un mécanisme de roulement (9), ce bras en console étant guidé, en arrière des voies (5), parallèlement à ces dernières, caractérisé par le fait que le soulèvement et l'abaissement du point d'articulation (19) s'effectuent lors du basculement du tablier de pont (18), le point d'articulation (19) étant abaissé de la position active à la position de repos à peu près verticale, lors du relèvement du tablier de pont (18), alors qu'il est soulevé de la position de repos approximativement verticale à la position active, lors de l'abaissement du tablier de pont (18).

2. Pont suivant la revendication 1, caractérisé par le fait qu'un bras articulé (20) s'engage au-dessous du tablier de pont (18) à distance du point d'articulation (19) et que le point d'articulation (19) est monté sur un chariot (16) qui peut être déplacé vers le haut et vers le bas sur le bras en console (12), et sur lequel agit un vérin de travail (21).

3. Pont suivant la revendication 2, caractérisé par le fait que le point d'articulation inférieur du levier articulé (20) est relié rigidement au bras en console (10).

4. Pont suivant la revendication 2, caractérisée par le fait que le point d'articulation inférieur du levier articulé (20) est relié rigidement au chariot (16) ou à une traverse (30) reliant les deux chariots (16).

5. Pont suivant la revendication 2, caractérisée par le fait que le levier articulé est un vérin hydraulique à double effet (20) et que également le vérin de travail (21) se trouvant au-dessus du chariot (16), est un vérin de travail à double effet.

6. Pont suivant la revendication 5, caractérisé par le fait que les deux vérins (20,21) sont associés à un système hydraulique de telle sorte que, lors d'un allongement d'un vérin, l'autre peut être raccourci.

7. Pont suivant la revendication 6, caractérisé par le fait que le niveau du tablier de pont (18) se trouvant dans la position active peut être réglé en actionnant les deux vérins (20,21).

8. Pont suivant la revendication 2, caractérisé par le fait que lorsque le tablier de pont (18) est dans la position de repos, aussi bien le levier articulé (20) que le vérin de travail (21) sont pratiquement verticaux.

9. Pont suivant une ou plusieurs des revendications précédentes, caractérisé par le fait que les leviers articulés (20) ou les vérins (21) sont prévus respectivement par couple - un élément étant situé sur le côté gauche et l'autre sur le côté droit du tablier de pont (18).
